# EUROPEAN PATENT SPECIFICATION

(11) **EP 1 451 439 B1**
(45) Date of publication and mention of the grant of the patent: **25.01.2006**
(21) Application number: 02783244.3
(22) Date of filing: 26.11.2002
(51) Int. Cl.: E21B 19/16, B25B 13/46, B25B 13/50

(54) **GRIPPING APPARATUS**
GREIFVORRICHTUNG
DISPOSITIF DE SERRAGE

(30) Priority: 04.12.2001 NZ 51591901
(43) Date of publication of application: 01.09.2004
(73) Proprietor: WEATHERFORD/LAMB, INC., Houston Texas 77027 (US); Niven, David, New Plymouth (NZ)
(72) Inventor: NIVEN, David, New Plymouth (NZ)
(74) Representative: Talbot-Ponsonby, Daniel Frederick
(86) International application number: PCT/GB2002/005320
(87) International publication number: WO 2003/048507

(56) References cited:
- WO-A-01/81046
- US-A- 3 748 702
- US-A- 4 827 808

## Description

The present invention relates to gripping apparatus.

A conventional gripping apparatus is shown in Figure 16, and described in detail in WO 01/21933. Jaws 90, 91 are pivotable about rods 92,93. Jaw 90 carries a semi-circular cage 94 containing rollers 95. Jaw 91 carries a semi-circular cage 96 containing rollers 97. The inner faces of the jaws 90,91 have recesses which receive the rollers 95,97.

When it is desired to grip tubular 98, The cages 94,96 are rotated relative to the jaws 90,91. This causes the rollers to roll along their respective recesses and become wedged between the tubular and the jaw.

WO 01/81046 describes a mechanical coupling device comprising a plurality of rollers and a body having a cam surface which is shaped so as to urge the rollers against a gripped member when the rollers roll along the cam surface.

A first aspect of the invention provides gripping apparatus characterised in that the plurality of rollers taper axially from a relatively narrow end to a relatively wide end, and in that the cam surface is also shaped so as to urge the rollers against the gripped member when the rollers translate axially with respect to the cam surface.

The use of tapered rollers provides a number of advantages compared to the parallel-sided rollers described in WO 01/21933 and WO 01/81046. Firstly, the rollers can provide resistance to both axial and rotational forces. Secondly, the system is more flexible because the rollers can be engaged in two different ways (that is, by sliding axially or by rolling). Thirdly, the apparatus can accommodate different gripped members with a wider variety of sizes. Fourthly, the rollers can be more densely packed because a smaller amount of rolling movement needs to be accommodated. Fifthly, axial engagement of the rollers can be achieved more easily using a linear drive device such as a hydraulic or pneumatic cylinder.

Preferably the apparatus further comprises an actuator for generating relative axial and/or rolling movement between the rollers and the cam surface to urge the rollers against the gripped member.

The actuator may engage the rollers and/or the cam surface. The cam surface or the rollers may remain stationary during the relative movement.

In a preferred embodiment, the rollers are moved by a cage coupled to a hand operated lever. Alternatively, the actuator may include a hydraulic or pneumatic cylinder.

Preferably the actuator comprises a plurality of resilient members, such as leaf springs, each coupled with a respective roller. The resilient members can then flex by different amounts if one of the rollers becomes stuck.

The angle of taper of the rollers may vary, but preferably is approximately constant along the length of the rollers.

The rollers may have a non-circular (e.g. elliptical) cross-section but typically are substantially circular in cross-section.

Most preferably the rollers are substantially frustoconical.

In one embodiment all of the rollers taper in the same direction. In another embodiment the direction of taper of the rollers alternates between successive rollers. This 'top-and-tail' arrangement permits the rollers to be packed more densely.

Typically the cam surface is formed with a plurality of recesses, each recess receiving a respective roller.

The body may comprise a single fixed piece, or may comprise two or more jaws which can be opened to admit the gripped member.

A second aspect of the invention provides apparatus for gripping a downhole tubular comprising gripping apparatus according to the first aspect of the invention.

The apparatus is particularly suited to such uses, in which the downhole tubular may be pipe casing, a drill string, or any other tubular associated with subterranean operations, typically in the oilfield industry.

For instance the apparatus may be of use in a power tong for gripping and rotating the downhole tubular, a backup for gripping and securing the downhole tubular against rotational movement, or in an elevator for securing the downhole tubular against axial and rotational movement.

A third aspect of the invention provides a socket wrench comprising gripping apparatus according to the first aspect of the invention. This provides an alternative application for the apparatus. In this case, the gripped member is an integral part of the apparatus, and comprises one or more sockets, typically hexagonal shaped.

A conventional method of gripping a downhole tubular is described in US-A-5845549 and US-A-4084453. Gripping members with sharp teeth are forced into engagement with the tubular. A problem with this method is that the teeth cause permanent deformation of the tubular. In certain circumstances this can present serious problems. For instance, in a sour gas well, corrosive gases such as Hydrogen Sulphide and Carbon Dioxide will be present. If the tubular is formed with a material such as Chromium, these gases will corrode the tubular more quickly if the tubular has a rough deformed surface.

A fourth aspect of the invention provides a method of handling a downhole tubular comprising gripping the tubular with a plurality of gripping members arranged circumferentially around the pipe; and transferring rotational and/or longitudinal forces to or from the tubular, wherein the tubular is gripped in such a manner so as not to exceed the elastic deformation limit of the tubular while the forces are being transferred.

The advantage of the fourth aspect of the invention is that it substantially avoids permanent deformation of the tubular.

Typically the method comprises urging the gripping members against the tubular by a wedging action. This wedging action tends to spread the gripping force over a relatively wide area, thus avoiding excessive deformation of the tubular.

Typically the gripping member comprises a roller. The roller may have a wide variety of shapes including cylindrical, frustoconical, spherical or asymmetric - for instance the 'dog bone' shape shown in Figure 13 of WO 01/21933.

The gripping method may be employed during a variety of downhole operations. For example the tubular may be gripped while it is coupled (for instance by screwing) with an additional length of downhole tubular.

Typically the maximum deformation of the tubular is greater than 10% and less than 100% of the elastic limit.

A number of embodiments of the invention will now be described by way of example only and with reference to the accompanying drawings, in which:
Figure 1 is a sectional side view of a pipe string gripping mechanism;
Figure 2 is a cross-section taken along line A-A in Figure 1;
Figure 3 is a side view of the mechanism from the right-hand side of Figure 1 with the actuator handle in a partially raised position;
Figure 4a is a view of the cage as viewed from inside the bore of the mechanism, with no pipe casing present;
Figure 4b is a view of an alternative cage;
Figure 4c is a view of a further alternative cage;
Figure 5 is a plan view of an oil field tong incorporating the mechanism of Figures 1-4;
Figure 5a is a plan view of an adapter plate;
Figure 6 shows the tong with the gripping jaws open;
Figure 7 is a sectional view of an alternative pipe string gripping mechanism with inverted rollers;
Figure 8 is a perspective view of an alternative pipe string gripping mechanism with alternating rollers;
Figure 9a is a view of the cage as viewed from inside the bore of the mechanism of Figure 8, with no pipe casing present;
Figure 9b is a section along line B-B in Figure 9a;
Figure 10 is a simplified plan view of the mechanism of Figures 1-4 showing the rollers in their non-engaged position;
Figure 11 shows the rollers after they have rolled into a partially engaged position;
Figure 12 shows the rollers in their fully engaged position and deforming the pipe string;
Figure 13a is a front view of a hand held socket wrench;
Figure 13b is a side view of the wrench of Figure 13a;
Figure 13c is a cross-section taken along line C-C in Figure 13a;
Figure 14 is a cross-sectional side view of a slip-type elevator; and
Figure 15 is a plan view of the elevator of Figure 14.

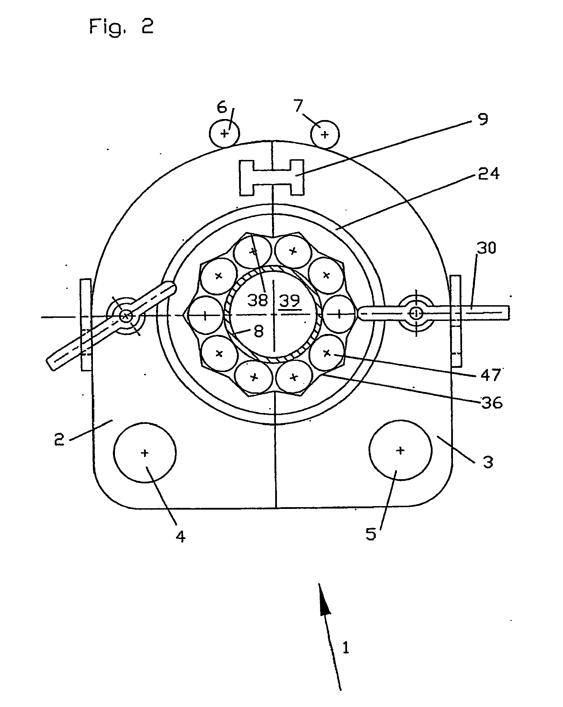

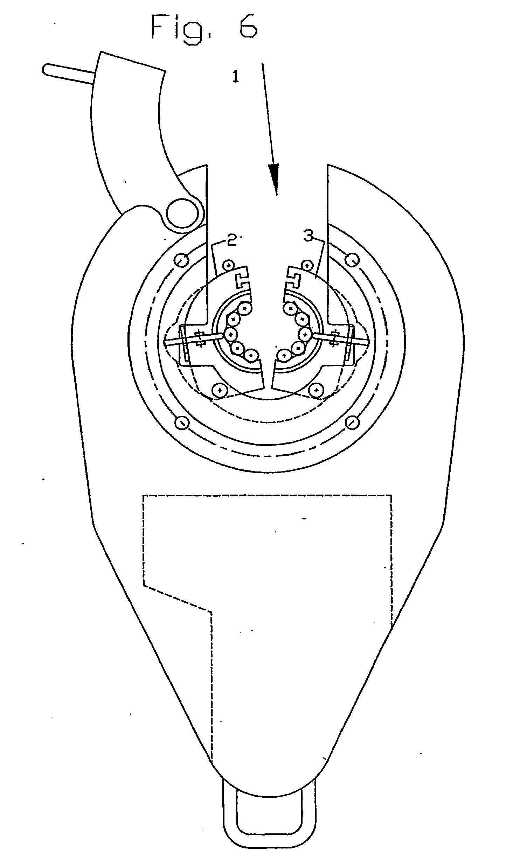

Referring to Figure 2, a gripping mechanism designated generally at 1 comprises a pair of jaws 2,3 which are each mounted on respective pivot shafts 4,5. The jaws 2,3 can be pivoted apart by handles 6,7 to the open position shown in Figure 6, in which a pipe string 8 can be introduced into the bore 39 between the jaws. The jaws are then closed and secured by means of a closing key 9.

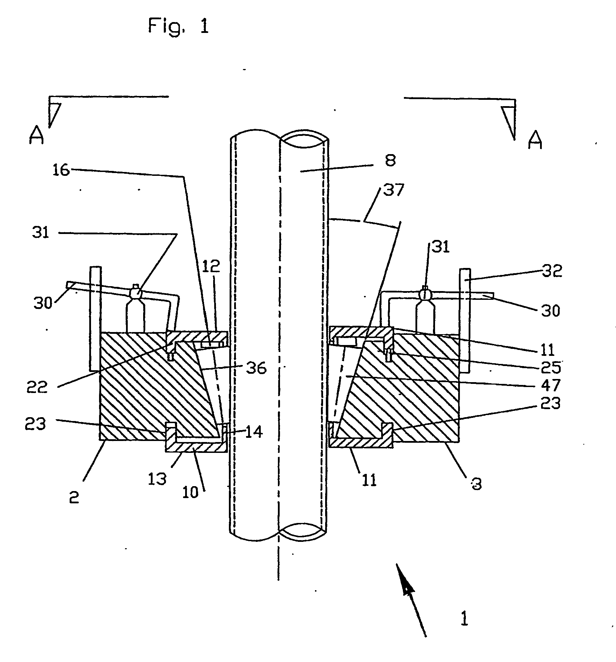

Referring to Figure 1, each jaw 2,3 carries a respective cage 10,11 (not shown in Figure 2). The two cages are identical so only cage 10 will be described in detail. The cage 10 has a semi-cylindrical body portion 14 with upper and lower flanges 12,13. Figure 4a shows the cage 10 as viewed from inside the bore between the jaws with the pipe string 8 removed. As shown in Figure 4a, the upper flange 12 carries a fastener 15 which secures a leaf spring 16 to the underside of the flange 12. The leaf spring 16 has a pair of semicircular projections which each engage a relatively wide upper end of a respective roller 47 to apply a downward biasing force. The rollers 47 are frustoconical in shape and formed from 420 stainless steel. The rollers 47 each protrude partially through a respective tapered slot 20,21 which is slightly narrower than the rollers to prevent the rollers from passing through the slots. The relatively narrow lower ends of the rollers are biased against the base of the slots 20,21 by the leaf spring 16 to secure the rollers in place.

Referring to Figure 1, the upper and lower flanges 12,13 each have guides 22,23 which are received in respective upper and lower cage grooves in the jaws 2,3. The upper cage groove 24 is shown in the plan view of Figure 2. The upper cage groove 24 contains a return spring 25 shown in Figure 1 which applies an upwards biasing force to the cage guide 22.

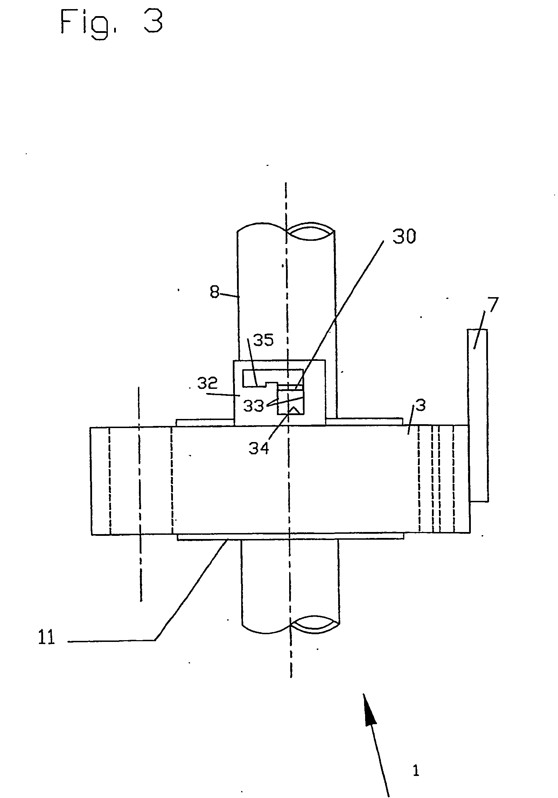

Each cage 10,11 can be driven downwards against the force of the return spring 25 by a respective actuation mechanism. Only the actuation mechanism driving cage 11 will be described. The mechanism comprises an L-shaped actuation arm 30 pivotally mounted to the jaw 3 by a rose joint 31. Referring to Figure 3, a plate 32 fixed to the jaw 3 has an L-shaped slot 33 which receives the actuation arm 30. To drive the cage 11 down to its engaged position, the actuation arm 30 is lifted up from the position shown in Figure 1 (in which the arm engages the lower face 34 of the slot 33), then rotated until the arm 30 engages face 35 of slot 33. The arm 30 pushes down onto the cage to drive it to the lowered, engaged position. For illustration, the cage 10 (and its associated actuation mechanism) is shown in its engaged position in Figure 1 and the cage 11 is shown in its unengaged position.

As the roller 47 slides axially down to its engaged position, the correspondingly tapered inner cam surface 36 of the jaw 2 wedges the roller against the pipe string. This secures the pipe string against relative axial movement.

Preferably the internal angle of taper 37 of the cam surface 36 and the roller is greater than 0 degrees and less than 60 degrees. More preferably the internal angle of taper 37 is in the range of 3 to 5 degrees. The angle of taper is exaggerated in the drawings for purposes of illustration.

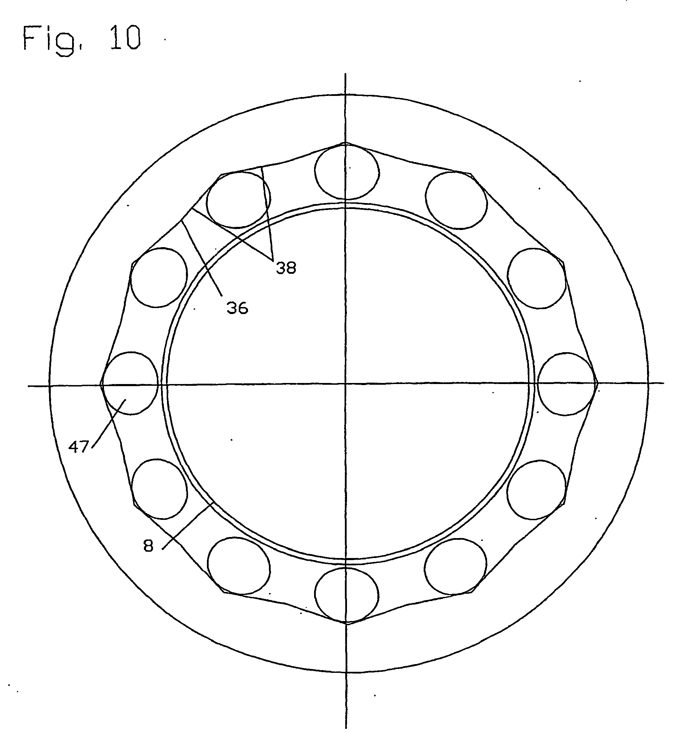

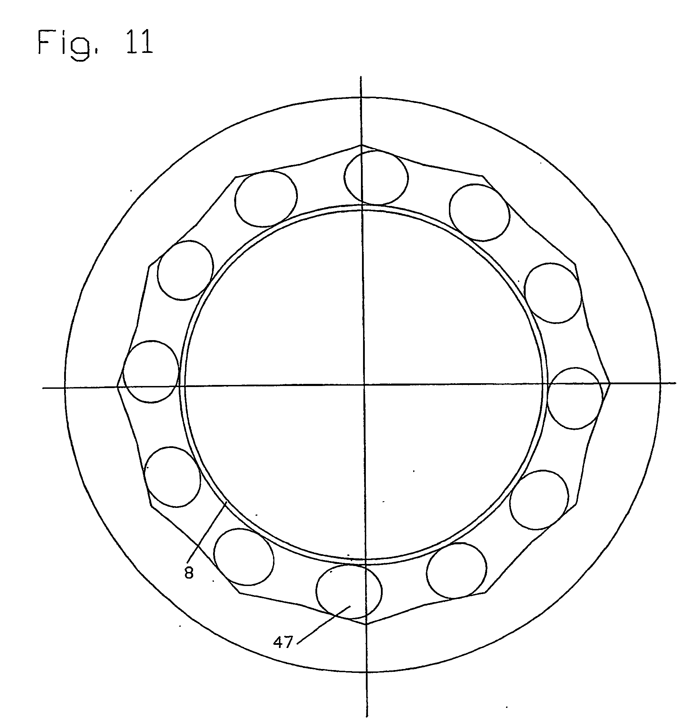

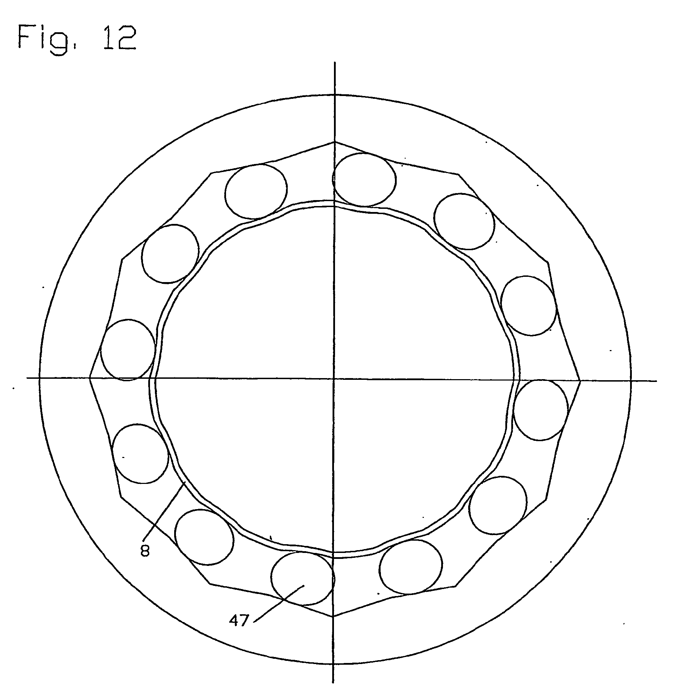

The cam surface 36 is formed with a series of V-shaped recesses 38 arranged around the circumference of the bore 39 which receive the rollers, as shown in the plan view of Figure 2. These recesses act to urge the rollers against the pipe string as described below with reference to Figures 10-12. In the non-engaged position of Figure 10 the rollers 47 are each centered in their respective recesses 38 in the cam surface 36. If a torque is applied to the pipe string (or equivalently if the cages are rotated) the rollers will roll around the pipe string 8. As the rollers move, they are urged by the cam surface towards the pipe string to the position shown in Figure 11 in which they engage the pipe string. As the rollers continue to move, they are wedged into the pipe string and cause the pipe string to deform as shown in Figure 12. Such deformation could be measured, for example, by a strain gauge attached to the inner or outer circumference of the pipe string.

However, the pipe string only needs to deform a small amount in order to firmly grip the rollers. Therefore, the pipe casing 8 is not deformed beyond its elastic deformation limit (either during initial gripping or when the pipe casing is being rotated) and when the rollers are released to the non-engaging position of Figure 10, the pipe casing 8 relaxes back to its undeformed state.

It will be appreciated that the range of movement of the rollers 47, and the degree of deformation of the pipe string 8, have both been exaggerated in Figures 10-12 for purposes of illustration.

The actuation mechanism shown in Figures 1-3 drives the cages downwards to engage the rollers with the pipe string. An advantage of this arrangement is that a wide variety of pipe string diameters can be accommodated by varying the range of movement of the cages.

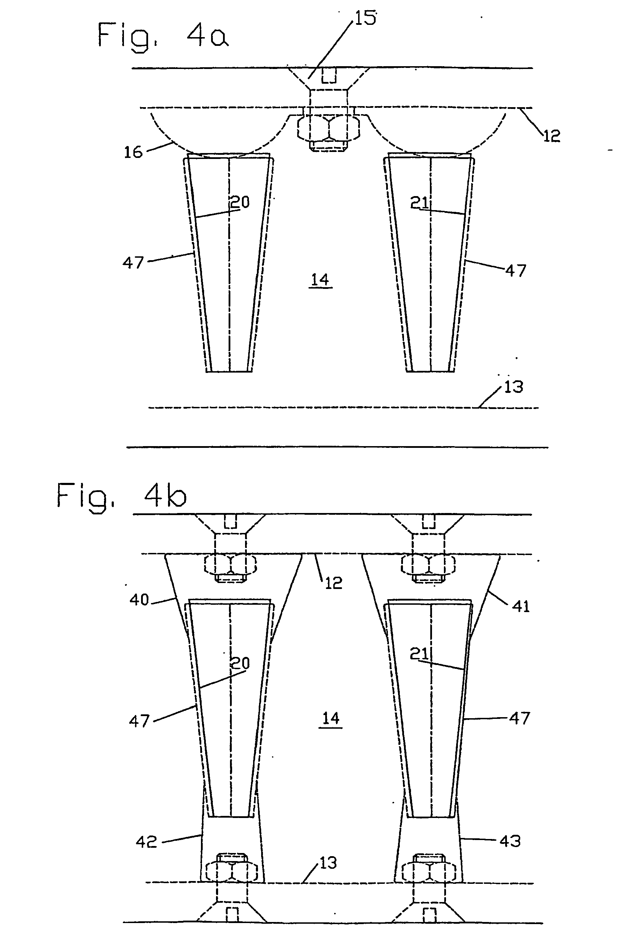

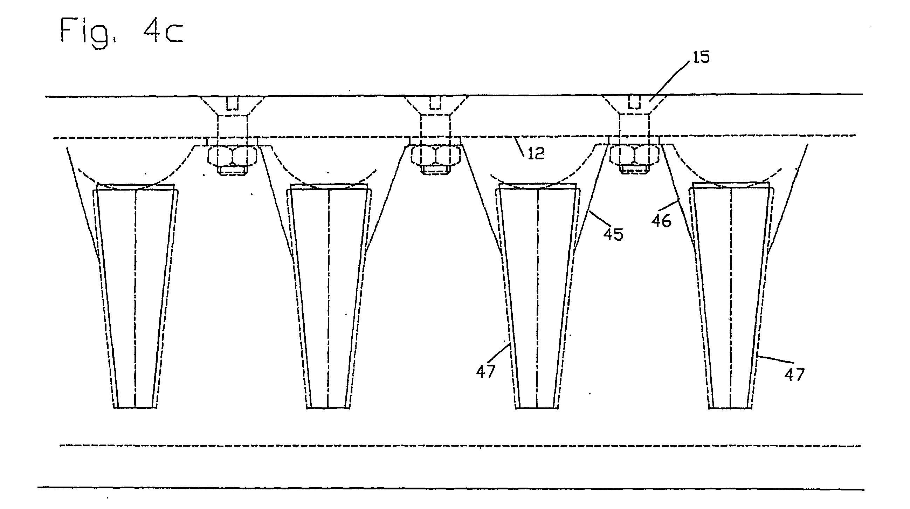

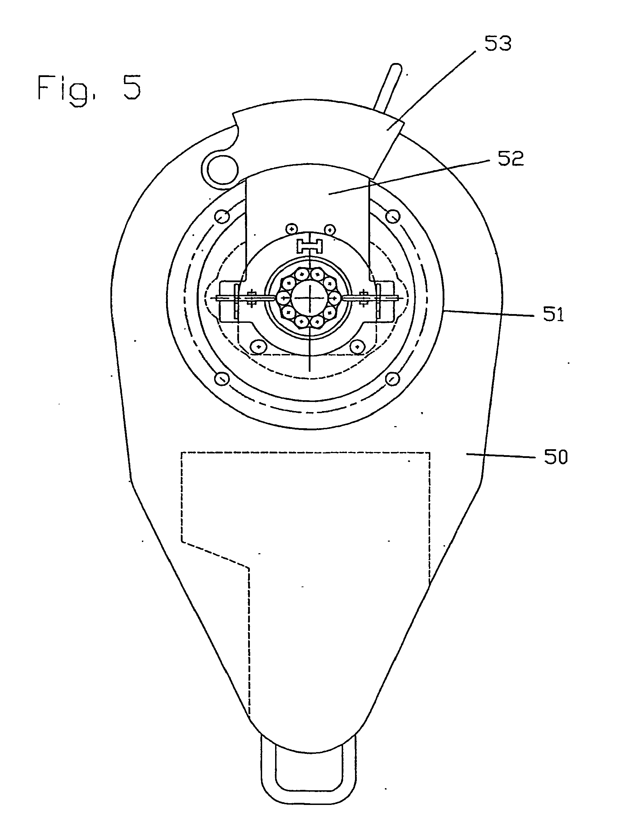

In an alternative arrangement illustrated in Figure 4b, the cages are rotated by alternative actuation mechanisms (not shown) to engage the rollers with the pipe string. In this case, the leaf spring 16 is replaced with upper leaf springs 40,41 and lower leaf springs 42,43. The leaf springs 40-43 each have a respective base secured to a cage flange 12/13 and a pair of arms which grip opposite sides of the roller. When the cage is rotated, force is applied to the rollers by the spring arms, causing the rollers to roll round the pipe string.

In a further alternative arrangement, two different actuation mechanisms (not shown) are provided - one to drive the rollers downwards, and another to rotate the rollers. The roller mounting system for such a mechanism is shown in Figure 4c. Each fastener 15 secures leaf spring 16 to flange 12. Each fastener 15 also secures a second leaf spring having a base and two arms 45,46 which each apply a sideways biasing force to a respective different roller.

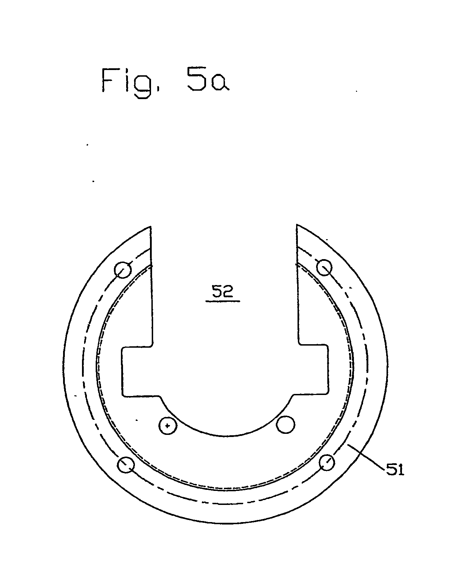

Referring to Figures 5,5a and 6 - the gripping mechanism 1 is mounted, in use, in a tong 50. The mechanism 1 is housed between a pair of adapter plates 51. Pipe string 8 is introduced by opening gate 53 and jaws 2,3 (see Figure 6) and moving the pipe string 8 laterally into throat 52.

In use, an existing pipe string (not shown) is received in a borehole and axially supported by a slip elevator (not shown). In order to attach an additional length of pipe string 8, the existing pipe string is secured against torque by a set of backup jaws (not shown) and the additional length 8 is gripped by the tong 50 and screwed into the existing pipe string. Large torques are required to ensure a gas tight seal between the coupled lengths of pipe string.

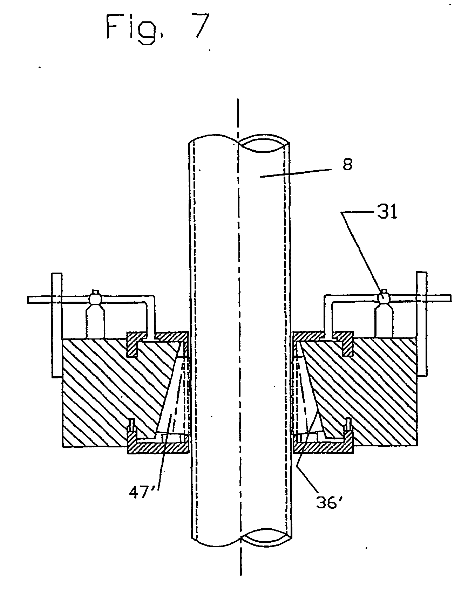

It will be appreciated that the mechanism of Figures 1-3 can be inverted as shown in Figure 7. In this case the angle of taper of the rollers 47' and cam surface 36' are reversed, and the cages are pulled upwards by their respective actuation mechanisms.

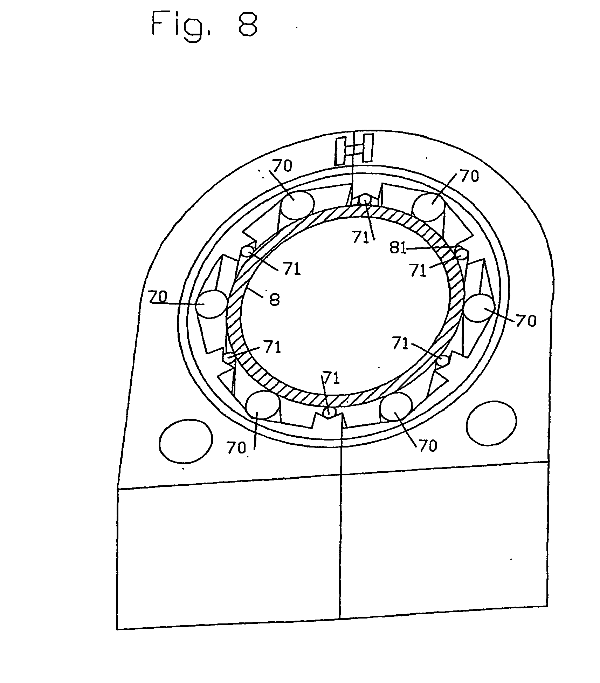

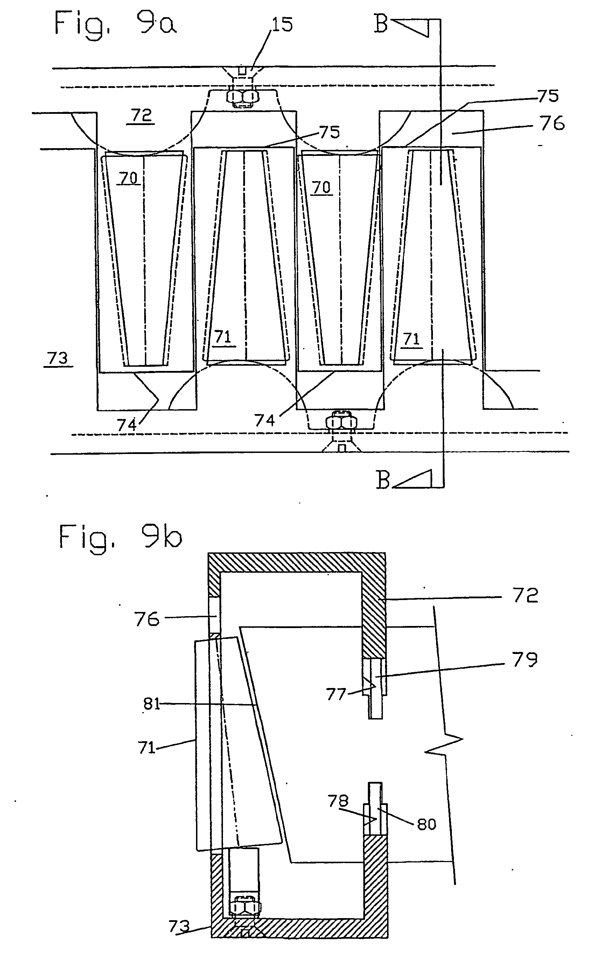

In a further alternative arrangement shown in Figures 8, 9a and 9b, the rollers are 'top-and-tailed'. Specifically, there are six downwardly directed rollers 70 which alternate with six upwardly directed rollers 71. Referring to Figures 9a and 9b: the downwardly directed rollers 70 are mounted in a first cage 72 and the upwardly directed rollers 71 are mounted in a second cage 73. The cage 72 has a series of downwardly pointed fingers 74 and the cage 73 has a series of upwardly pointed fingers 75 which interlock with the fingers 74. Windows 76 are provided to allow relative axial movement between the two sets of fingers.

Each cage is driven up or down by a respective actuation mechanism (not shown), and is mounted in a respective cage groove 77,78 containing a return spring 79,80, shown in Figure 9b.

The rollers 71 are urged against the pipe casing by a correspondingly tapered cam surface 81 with a V-shaped recess shown in Figure 8, and the rollers 70 are urged against the pipe casing by a similar cam surface (not shown).

An advantage of the arrangement of Figures 8-9b is that the rollers can be more densely packed than in the arrangement of Figure 1.

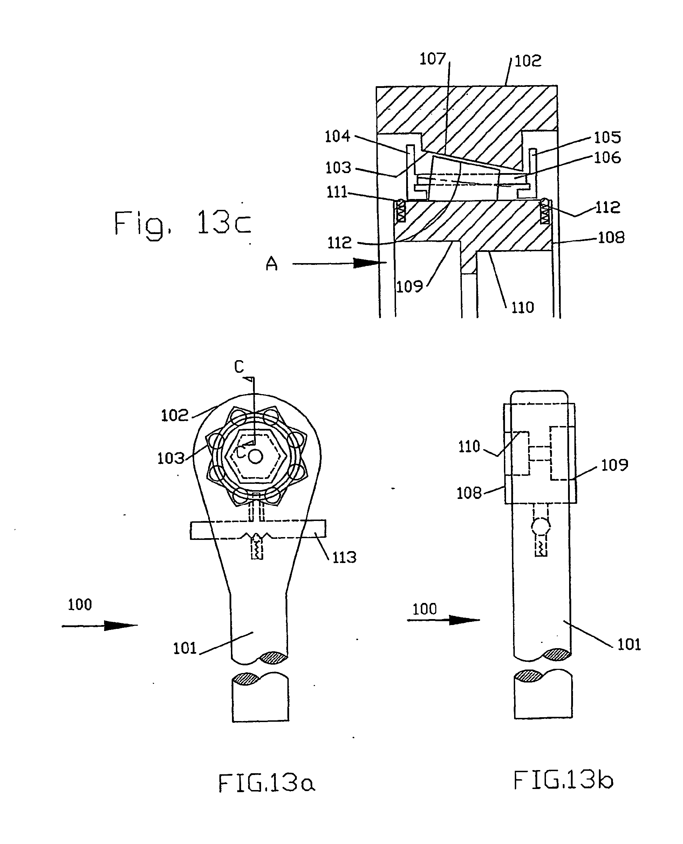

Referring to Figures 13a-13c, a socket wrench designated generally at 100 has a handle 101 and a head 102 having a bore defined by a cam surface 103 shown most clearly in Figure 13c. A cage mounted in the bore comprises a cylindrical body portion 106 with a pair of flanges 104,105. The body portion 106 has eight tapered windows which each receive a respective tapered roller 107.

A generally cylindrical socket member 108 is formed with a large hexagonal socket 109 on one side and a small hexagonal socket 110 on the other side. The member 108 has a series of holes arranged around its periphery each housing a coil spring and indent ball 111,112.

The rollers 107 can be engaged with the member 108 in two ways. In one alternative, by pushing the member 108 with the thumb in a direction indicated by arrow A (while holding the handle 101 still), the member 108 moves the indent ball 111 which engages the cage flange 104. The cage then engages the rollers 107 and slides them along cam surface 112. The cam surface 112 forces the rollers against the member 108 to lock the member 108 in place. A nut can then be received in either of the sockets 109,110 and rotated by rotating the handle 101 in either direction. The rollers can be disengaged by pushing the member 108 in the opposite direction to arrow A with the thumb.

In a second alternative, the rollers can be engaged by rotating the cage with an actuating handle 113. The handle 113 can be moved to the left or right (as viewed in Figure 13a). The cam surface 103 is formed with V-shaped recesses shown in Figure 13a which urge the rollers 107 against the member 108 when the cage is rotated.

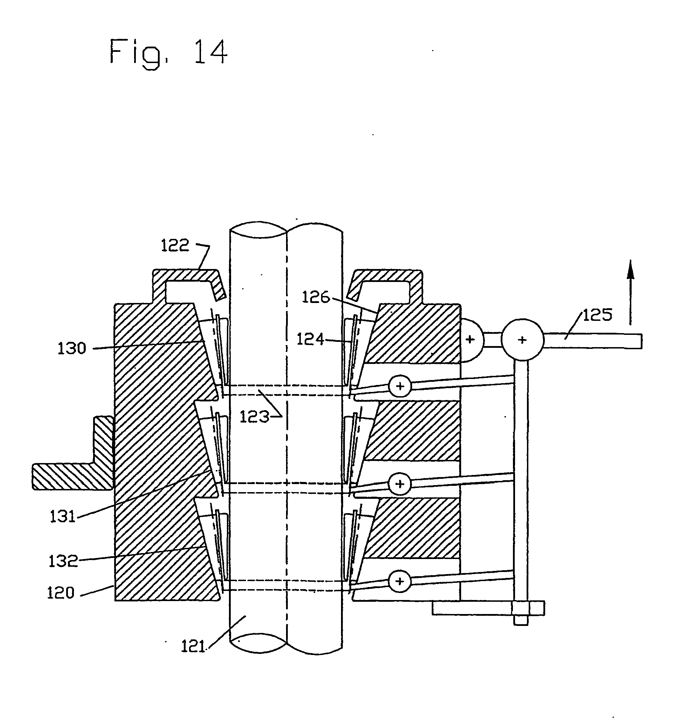

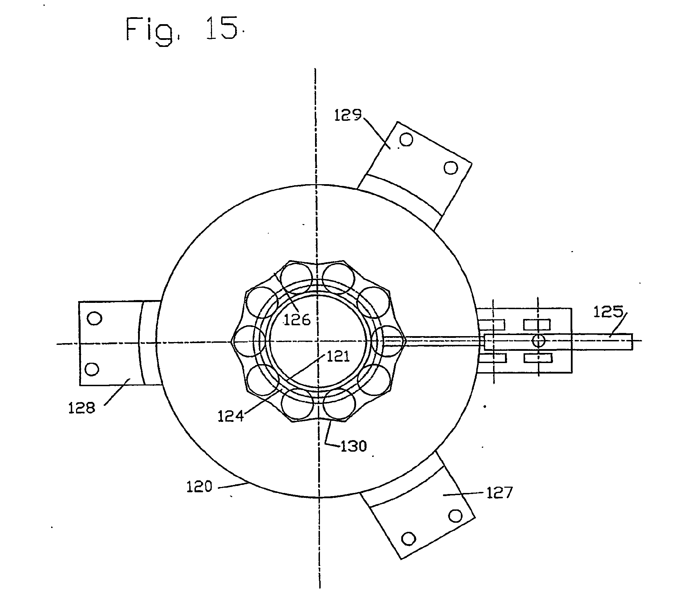

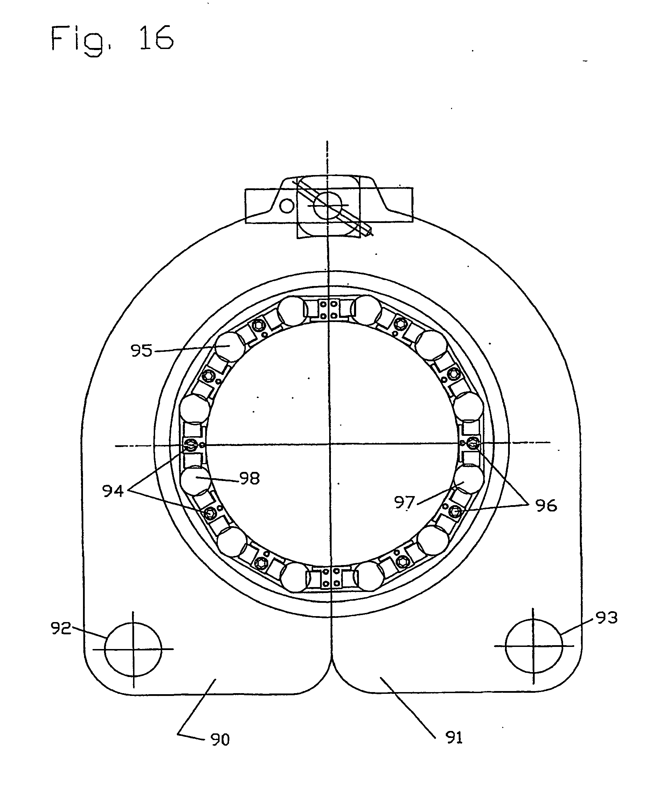

A slip type elevator is shown in Figures 14 and 15. The elevator has a generally cylindrical body portion 120 which is formed as a single piece, and is not split and hinged as in the tong mechanism shown in Figures 1-7. The body portion has a bore which receives a pipe string 121. The pipe string 121 is gripped by thirty rollers, arranged as three layers of ten rollers. The upper layer of ten rollers 130 is shown in the plan view of Figure 15. Two rollers in each layer 130,131,132 are shown in the sectional view of Figure 14.

The upper layer of rollers 130 is confined by a guide 122 shown in Figure 14 but omitted from Figure 15 for clarity. Each layer of rollers is supported by a respective cage comprising a circular ring 123 and flange 124 which is formed with a series of tapered slots (not shown) which receive the rollers. The three cages are each coupled to a handle 125. When the handle 125 is lifted up, the cages are lowered which allows the rollers to drop due to gravity. As the rollers slide down they are forced by respective cam surfaces 126 against the pipe string 121. The weight of the pipe string 121 can then be supported by the rollers. The weight forces are transferred to the body portion 120 which is attached to a rig floor (not shown) by three supports 127,128,129 shown in Figure 15. In an alternative arrangement (not shown) the weight forces may be transferred to bails by lugs.

If the pipe string 121 is rotated, the rollers roll up their V-shaped recesses in the cam surface (shown in Figure 15) and are forced against the pipe string, thus resisting the rotational movement.

The mechanism shown in Figures 1-13 (with a single row of rollers) is able to transfer axial load and torque. However, the ability to transfer axial load is increased when torque is also present. Where the mechanism is employed in a slip elevator, then torque may not be present. This is why multiple rows of rollers are present in the embodiment of Figures 14,15: to provide increased ability to resist axial loads in the absence of torque, whilst not deforming the pipe casing beyond its elastic deformation limit. Although only three rows of rollers are shown in Figure 14, a larger number of rows (for instance fifteen) may be employed if necessary.

## Claims

1. Gripping apparatus comprising a plurality of rollers and a body having a cam surface which is shaped so as to urge the rollers against a gripped member when the rollers roll along the cam surface; **characterised in that** the plurality of rollers are tapered axially from a relatively narrow end to a relatively wide end, and **in that** the cam surface is also shaped so as to urge the rollers against the gripped member when the rollers translate axially with respect to the cam surface

2. Apparatus according to claim 1 further comprising an actuator for generating relative movement between the rollers and the cam surface to urge the rollers against the gripped member.

3. Apparatus according to claim 2 wherein the actuator is configured to generate relative axial movement between the rollers and the cam surface.

4. Apparatus according to claim 2 or 3 wherein the actuator is configured to generate relative rolling movement between the rollers and the cam surface.

5. Apparatus according to claim 2, 3 or 4 wherein the actuator engages the rollers.

6. Apparatus according to claim 5 wherein the actuator comprises a plurality of resilient members, each coupled with a respective roller.

7. Apparatus according to any of the preceding claims wherein the angle of taper of the rollers is approximately constant along the length of the rollers.

8. Apparatus according to any of the preceding claims wherein the rollers are substantially circular in cross-section.

9. Apparatus according to claim 7 or 8 wherein the rollers are substantially frustoconical.

10. Apparatus according to any of the preceding claims wherein the direction of taper of the rollers alternates between successive rollers.

11. Apparatus according to any of the preceding claims wherein the cam surface is formed with a plurality of recesses, each recess receiving a respective roller.

12. Apparatus according to any of the preceding claims wherein the body comprises two or more jaws which can be opened to admit the gripped member.

13. Apparatus according to any of the preceding claims, wherein the rollers are spaced axially with respect to each other.

14. Apparatus according to claim 13 wherein the rollers are arranged in two or more axially spaced rows.

15. Apparatus for gripping a downhole tubular comprising gripping apparatus according to any of the preceding claims.

16. Apparatus according to claim 15 wherein the apparatus is a power tong for gripping and rotating the downhole tubular.

17. Apparatus according to claim 15 wherein the apparatus is a backup for gripping and securing the downhole tubular against rotational movement.

18. Apparatus according to claim 15 wherein the apparatus is an elevator for securing the downhole tubular against axial and rotational movement.

19. A socket wrench comprising gripping apparatus according to any of claims 1-14.

20. A method of handling a tubular, comprising gripping the tubular with a plurality of gripping members in the form of rollers arranged circumferentially around the tubular, and transferring rotational and/or longitudinal forces to or from the tubular, **characterised in that** the tubular is a downhole tubular, the gripping members are tapered, and the tubular is gripped in such a manner so as not to exceed the elastic deformation limit of the tubular while the forces are being transferred.

21. The method of claim 20 further comprising the step of urging the gripping members against the tubular by a wedging action.

22. The method of claim 20 or 21, wherein the gripping apparatus is gripping apparatus according to any of claims 1-14.

23. The method of any of claims 20 to 22 further comprising the step of coupling the downhole tubular to an additional length of downhole tubular.

24. The method of any of claims 20 to 23 wherein the maximum deformation of the tubular lies in a range greater than 10% of the elastic limit of the tubular and less than 100% of the elastic limit of the tubular.

25. The method of any of claims 20 to 24, comprising gripping the tubular with three or more gripping members.

26. The method of any of claims 20 to 25, wherein the gripping members are metallic.

## Patentansprüche

1. Greifvorrichtung, die eine Vielzahl von Rollen und einen Körper mit einer Wellenfläche aufweist, die so geformt ist, dass sie die Rollen gegen ein ergriffenes Element drückt, wenn die Rollen entlang der Wellenfläche rollen; **dadurch gekennzeichnet, dass** die Vielzahl der Rollen axial von einem relativ schmalen Ende zu einem relativ breiten Ende verjüngt ist, und dass die Wellenfläche ebenfalls so geformt ist, dass die Rollen gegen das ergriffene Element gedrückt werden, wenn sich die Rollen axial mit Bezugnahme auf die Wellenfläche umsetzen.

2. Vorrichtung nach Anspruch 1, die außerdem ein Betätigungselement für das Erzeugen einer relativen Bewegung zwischen den Rollen und der Wellenfläche aufweist, um die Rollen gegen das ergriffene Element zu drücken.

3. Vorrichtung nach Anspruch 2, bei der das Betätigungselement so ausgebildet ist, dass es eine relative axiale Bewegung zwischen den Rollen und der Wellenfläche erzeugt.

4. Vorrichtung nach Anspruch 2 oder 3, bei der das Betätigungselement so ausgebildet ist, dass es eine relative Rollbewegung zwischen den Rollen und der Wellenfläche erzeugt.

5. Vorrichtung nach Anspruch 2, 3 oder 4, bei der das Betätigungselement mit den Rollen in Eingriff kommt.

6. Vorrichtung nach Anspruch 5, bei der das Betätigungselement eine Vielzahl von elastischen Elementen aufweist, die jeweils mit einer entsprechenden Rolle gekuppelt sind.

7. Vorrichtung nach einem der vorhergehenden Ansprüche, bei der der Verjüngungswinkel der Rollen annähernd konstant über die Länge der Rollen ist.

8. Vorrichtung nach einem der vorhergehenden Ansprüche, bei der die Rollen im Wesentlichen einen kreisförmigen Querschnitt aufweisen.

9. Vorrichtung nach Anspruch 7 oder 8, bei der die Rollen im Wesentlichen kegelstumpfförmig sind.

10. Vorrichtung nach einem der vorhergehenden Ansprüche, bei der die Richtung der Verjüngung der Rollen zwischen aufeinanderfolgenden Rollen wechselt.

11. Vorrichtung nach einem der vorhergehenden Ansprüche, bei der die Wellenfläche mit einer Vielzahl von Aussparungen ausgebildet ist, wobei jede Aussparung eine entsprechende Rolle aufnimmt.

12. Vorrichtung nach einem der vorhergehenden Ansprüche, bei der der Körper zwei oder mehr Klemmbacken aufweist, die geöffnet werden können, um das ergriffene Element aufzunehmen.

13. Vorrichtung nach einem der vorhergehenden Ansprüche, bei der die Rollen axial mit Bezugnahme zueinander beabstandet sind.

14. Vorrichtung nach Anspruch 13, bei der die Rollen in zwei oder mehr axial beabstandeten Reihen angeordnet sind.

15. Vorrichtung für das Ergreifen eines Tiefbohrrohres, die eine Greifvorrichtung nach einem der vorhergehenden Ansprüche aufweist.

16. Vorrichtung nach Anspruch 15, bei der die Vorrichtung eine Bohrgestängezange für das Ergreifen und Drehen des Tiefbohrrohres ist.

17. Vorrichtung nach Anspruch 15, bei der die Vorrichtung eine Stütze für das Ergreifen und Sichern des Tiefbohrrohres gegen eine Rotationsbewegung ist.

18. Vorrichtung nach Anspruch 15, bei der die Vorrichtung ein Hebewerk für das Sichern des Tiefbohrrohres gegen eine axiale und eine Rotationsbewegung ist.

19. Steckschlüssel, der eine Greifvorrichtung nach einem der Ansprüche 1 bis 14 aufweist.

20. Verfahren zur Handhabung eines Rohres, das die folgenden Schritte aufweist: Ergreifen des Rohres mit einer Vielzahl von Greifelementen in der Form von Rollen, die peripher um das Rohr angeordnet werden; und Übertragen von Rotations- und/oder Längskräften auf das oder vom Rohr, **dadurch gekennzeichnet, dass** das Rohr ein Tiefbohrrohr ist, die Greifelemente verjüngt sind und das Rohr in einer derartigen Weise ergriffen wird, dass nicht die elastische Verformungsgrenze des Rohres überschritten wird, während die Kräfte übertragen werden.

21. Verfahren nach Anspruch 20, das außerdem den Schritt des Drückens der Greifelemente gegen das Rohr durch eine Klemmwirkung aufweist.

22. Verfahren nach Anspruch 20 oder 21, bei dem die Greifvorrichtung eine Greifvorrichtung nach einem der Ansprüche 1 bis 14 ist.

23. Verfahren nach einem der Ansprüche 20 bis 22, das außerdem den Schritt des Kuppelns des Tiefbohrrohres mit einer zusätzlichen Länge des Tiefbohrrohres aufweist.

24. Verfahren nach einem der Ansprüche 20 bis 23, bei dem die maximale Verformung des Rohres in einem Bereich von mehr als 10 % der Elastizitätsgrenze des Rohres und weniger als 100 % der Elastizitätsgrenze des Rohres liegt.

25. Verfahren nach einem der Ansprüche 20 bis 24, das das Ergreifen des Rohres mit drei oder mehr Greifelementen aufweist.

26. Verfahren nach einem der Ansprüche 20 bis 25, bei dem die Greifelemente aus Metall sind.

## Revendications

1. Dispositif de préhension comprenant plusieurs rouleaux et un corps comportant une surface à came, formée de sorte à pousser les rouleaux contre un élément saisi lorsque les rouleaux roulent le long de la surface à came; **caractérisé en ce que** les nombreux rouleaux sont effilés axialement d'une extrémité relativement étroite vers une extrémité relativement large, et **en ce que** la surface à came est aussi formée de sorte à pousser les rouleaux contre l'élément saisi lorsque les rouleaux se déplacent axialement par rapport à la surface à came.

2. Dispositif selon la revendication 1, comprenant en outre un dispositif d'actionnement pour entraîner un déplacement relatif entre les rouleaux et la surface à came pour pousser les rouleaux contre l'élément saisi.

3. Dispositif selon la revendication 2, dans lequel le dispositif d'actionnement est destiné à entraîner un déplacement axial relatif entre les rouleaux et la surface à came.

4. Dispositif selon les revendications 2 ou 3, dans lequel le dispositif d'actionnement est destiné à entraîner un déplacement par roulement relatif entre les rouleaux et la surface à came.

5. Dispositif selon les revendications 2, 3 ou 4, dans lequel le dispositif d'actionnement s'engage dans les rouleaux.

6. Dispositif selon la revendication 5, dans lequel le dispositif d'actionnement comprend plusieurs éléments élastiques, couplés chacun à un rouleau respectif.

7. Dispositif selon l'une quelconque des revendications précédentes, dans lequel l'angle d'effilement des rouleaux est pratiquement constant le long de la longueur des rouleaux.

8. Dispositif selon l'une quelconque des revendications précédentes, dans lequel les rouleaux ont une section transversale pratiquement circulaire.

9. Dispositif selon les revendications 7 ou 8, dans lequel les rouleaux ont pratiquement une forme en tronc de cône.

10. Dispositif selon l'une quelconque des revendications précédentes, dans lequel la direction de l'effilement des rouleaux change entre les rouleaux successifs.

11. Dispositif selon l'une quelconque des revendications précédentes, dans lequel la surface à came comporte plusieurs évidements, chaque évidement recevant un rouleau respectif.

12. Dispositif selon l'une quelconque des revendications précédentes, dans lequel le corps comprend deux ou plusieurs mâchoires pouvant être ouvertes pour recevoir l'élément saisi.

13. Dispositif selon l'une quelconque des revendications précédentes, dans lequel les rouleaux sont espacés axialement les uns par rapport aux autres.

14. Dispositif selon la revendication 13, dans lequel les rouleaux sont agencés dans deux ou plusieurs rangées espacées axialement.

15. Dispositif de préhension d'un élément tubulaire de fond comprenant un dispositif de préhension selon l'une quelconque des revendications précédentes.

16. Dispositif selon la revendication 15, dans lequel le dispositif est constitué par une clé de vissage à commande pneumatique destinée à saisir et à faire tourner un élément tubulaire de fond.

17. Dispositif selon la revendication 15, dans lequel le dispositif est constitué par un moyen de renfort destiné à saisir et à fixer l'élément tubulaire de fond contre un déplacement par rotation.

18. Dispositif selon la revendication 15, dans lequel le dispositif est constitué par un élévateur destiné à fixer l'élément tubulaire de fond contre un déplacement axial et par rotation.

19. Clé à douille(s) comprenant un dispositif de préhension selon l'une quelconque des revendications 1 à 14.

20. Procédé de manipulation d'un élément tubulaire, comprenant la saisie de l'élément tubulaire avec plusieurs éléments de préhension sous forme de rouleaux agencés de manière circonférentielle autour de l'élément tubulaire, et de transfert des forces de rotation et/ou longitudinales vers l'élément tubulaire ou à partir de celui-ci, **caractérisé en ce que** l'élément tubulaire est un élément tubulaire de fond, les éléments de préhension étant effilés et l'élément tubulaire étant saisi de sorte à ne pas dépasser la limite de la déformation élastique de l'élément tubulaire au cours du transfert des forces.

21. Procédé selon la revendication 20, comprenant en outre l'étape de poussée des éléments de préhension contre l'élément tubulaire par une action de calage.

22. Procédé selon les revendications 20 ou 21, dans lequel le dispositif de préhension est un dispositif de préhension selon l'une quelconque des revendications 1 à 14.

23. Procédé selon l'une quelconque des revendications 20 à 22, comprenant en outre l'étape de couplement de l'élément tubulaire de fond à une longueur additionnelle d'un élément tubulaire de fond.

24. Procédé selon l'une quelconque des revendications 20 à 23, dans lequel la déformation maximale de l'élément tubulaire est comprise dans un intervalle dépassant de 10% la limite élastique de l'élément tubulaire et moins de 100% de la limite élastique de l'élément tubulaire.

25. Procédé selon l'une quelconque des revendications 20 à 24, comprenant l'étape de préhension de l'élément tubulaire avec trois ou plusieurs éléments de préhension.

26. Procédé selon l'une quelconque des revendications 20 à 25, dans lequel les éléments de préhension sont des éléments métalliques.
